# EUROPEAN PATENT APPLICATION

(11) **EP 4 741 331 A1**
(43) Date of publication of application: **13.05.2026**
(21) Application number: 25172788.9
(22) Date of filing: 28.04.2025
(51) Int. Cl.: B65H 5/22

(54) **RECORDING MEDIUM TRANSPORT DEVICE AND CORRESPONDING IMAGE FORMING APPARATUS**

(30) Priority: 11.11.2024 JP 2024196865
(71) Applicant: FUJIFILM Business Innovation Corp., Minato-ku Tokyo (JP)
(72) Inventor: MIYOSHI, Noriyuki, Ebina-shi, Kanagawa (JP); TOMITA, Yuhei, Ebina-shi, Kanagawa (JP); SHINOZAKI, Seigo, Ebina-shi, Kanagawa (JP); NAKAJIMA, Kohei, Ebina-shi, Kanagawa (JP)
(74) Representative: Becker Kurig & Partner Patentanwälte mbB

(57) **Abstract**

A recording medium transport device includes a belt member that performs circulatory movement, that includes a hole portion for causing air to pass from an outer peripheral surface side toward an inner peripheral surface side of the belt member, and that transports a recording medium attached to an outer peripheral surface and a protruding portion that is provided in a state of protruding from the outer peripheral surface of the belt member and that is provided to surround the hole portion.

## Description

### BACKGROUND OF THE INVENTION

### (i) Field of the Invention

The present invention relates to a recording medium transport device and an image forming apparatus.

### (ii) Description of Related Art

JP2002-137840A discloses a configuration where a belt body is provided with a through-hole that penetrates the belt body in a thickness direction and a protrusion portion that protrudes in the thickness direction to a belt transport surface side.

### SUMMARY OF THE INVENTION

In a device that transports a recording medium such as paper, for example, in some cases, the recording medium is transported in a state where the recording medium is attached to an outer peripheral surface of a belt member that circulates and moves. In this belt member, for example, a hole portion for suction is provided, and the recording medium is attracted to the hole portion, so that the recording medium is attached to the belt member.

Herein, in a case where the protruding portion is provided on the outer peripheral surface of the belt member, a contact area between the belt member and the recording medium can be reduced. On the other hand, in this case, the recording medium may be less likely to be attracted to the hole portion. In a case where the recording medium is less likely to be attracted to the hole portion, an attachment force of the recording medium to the outer peripheral surface of the belt member is reduced.

An object of the present invention is to suppress a reduction in an attachment force of a recording medium to an outer peripheral surface of a belt member, which is caused by provision of a protruding portion on the outer peripheral surface of the belt member, compared to a case where the protruding portion protruding from the outer peripheral surface of the belt member is not provided in a form of surrounding a hole portion provided in the belt member.

According to a first aspect of the present disclosure, there is provided a recording medium transport device including a belt member that performs circulatory movement, that includes a hole portion for causing air to pass from an outer peripheral surface side toward an inner peripheral surface side of the belt member, and that transports a recording medium attached to an outer peripheral surface and a protruding portion that is provided in a state of protruding from the outer peripheral surface of the belt member and that is provided to surround the hole portion.

According to a second aspect of the present disclosure, in the recording medium transport device according to the first aspect, a plurality of protruding portions may be provided and may be disposed in a lattice shape, and the hole portion may be surrounded by the protruding portions positioned around the hole portion, among the plurality of protruding portions disposed in the lattice shape.

According to a third aspect of the present disclosure, in the recording medium transport device according to the second aspect, each of the protruding portions disposed in the lattice shape may be disposed in a state of being inclined with respect to a movement direction of the belt member.

According to a fourth aspect of the present disclosure, in the recording medium transport device according to the first aspect, on the outer peripheral surface of the belt member, a plurality of annular protruding portions may be provided as the protruding portions, and an area of the hole portion may be smaller than an area of a region surrounded by one of the annular protruding portions.

According to a fifth aspect of the present disclosure, in the recording medium transport device according to any one of the first aspect to the fourth aspect, the protruding portion may be provided in a linear shape, and a width of the protruding portion may be within 1.5 mm.

According to a sixth aspect of the present disclosure, in the recording medium transport device according to the fifth aspect, a plurality of protruding portions may be provided and may be disposed in a lattice shape, and a separation distance between the protruding portions that extend in a common direction and that are adjacent to each other may be 1.2 mm or more.

According to a seventh aspect of the present disclosure, in the recording medium transport device according to any one of the first aspect to the sixth aspect, a plurality of protruding portions may be provided and may be disposed in a lattice shape, and a separation distance between the protruding portions that extend in a common direction and that are adjacent to each other may be equal to or larger than a value obtained by multiplying a width of the protruding portion by 0.8.

According to an eighth aspect of the present disclosure, in the recording medium transport device according to any one of the first aspect to the seventh aspect, a plurality of protruding portions may be provided and may be disposed in a lattice shape, the hole portion may be surrounded by the protruding portions positioned around the hole portion, among the plurality of protruding portions disposed in the lattice shape, as the protruding portions are disposed in the lattice shape, a plurality of rectangular protruding portions may be provided on the outer peripheral surface, and an area of a region surrounded by the rectangular protruding portions may be 5% or more and 80% or less of an area of the hole portion.

According to a ninth aspect of the present disclosure, there is provided an image forming apparatus including an image forming portion that forms an image on a recording medium, a heating device that heats the recording medium on which the image is formed by the image forming portion, and a recording medium transport device that transports the recording medium on which the image is formed by the image forming portion to the heating device or that transports the recording medium which has passed through the heating device, in which the recording medium transport device has a configuration of the recording medium transport device according to any one of the first aspect to the eighth aspect.

According to the first aspect of the present disclosure, a reduction in an attachment force of the recording medium to the outer peripheral surface of the belt member, which is caused by provision of the protruding portion on the outer peripheral surface of the belt member, can be suppressed compared to a case where the protruding portion protruding from the outer peripheral surface of the belt member is not provided in a form of surrounding the hole portion provided in the belt member.

According to the second aspect of the present disclosure, compared to a case where the hole portion is surrounded by a single annular protruding portion, the plurality of protruding portions can be positioned on a flow path of air that is to be directed toward the hole portion along a surface of the recording medium facing the belt member, among surfaces of the recording medium, and a reduction in a suction force, which is caused by air outside a space between the belt member and the recording medium being directed toward the hole portion, can be suppressed.

According to the third aspect of the present disclosure, in a case where a member that comes into contact with the outer peripheral surface of the belt member is provided, a time of contact between the member and the protruding portion can be increased compared to a case where the protruding portion is along the movement direction of the belt member or the width direction of the belt member.

According to the fourth aspect of the present disclosure, a suction force acting on the recording medium, which is a suction force acting per unit area, can be increased compared to a case where the area of the hole portion is larger than the area of the region surrounded by one annular protruding portion.

According to the fifth aspect of the present disclosure, uneven glossiness that can occur in the image formed on the recording medium can be reduced compared to a case where the width of the protruding portion exceeds 1.5 mm.

According to the sixth aspect of the present disclosure, uneven glossiness that can occur in the image formed on the recording medium can be reduced, compared to a case where the separation distance between the protruding portions adjacent to each other is less than 1.2 mm.

According to the seventh aspect of the present disclosure, uneven glossiness that can occur in the image formed on the recording medium can be reduced compared to a case where the separation distance between the protruding portions is less than the value obtained by multiplying the width of the protruding portion by 0.8.

According to the eighth aspect of the present disclosure, uneven glossiness that can occur in the image formed on the recording medium can be reduced compared to a case where the area of the region surrounded by the protruding portion is less than 5% of the area of the hole portion, and an attachment force of the recording medium to the belt member can be increased, compared to a case where the area of the region surrounded by the protruding portion exceeds 80% of the area of the hole portion.

According to the ninth aspect of the present disclosure, a reduction in an attachment force of the recording medium to the outer peripheral surface of the belt member, which is caused by provision of the protruding portion on the outer peripheral surface of the belt member, can be suppressed compared to a case where the protruding portion protruding from the outer peripheral surface of the belt member is not provided in a form of surrounding the hole portion provided in the belt member.

### BRIEF DESCRIPTION OF THE DRAWINGS

Exemplary embodiment(s) of the present invention will be described in detail based on the following figures, wherein:
Fig. 1 is a view showing an image forming apparatus;
Fig. 2 is a view of a paper transport device in a case of being viewed from a direction indicated by an arrow II of Fig. 1;
Fig. 3 is a view of a belt member in a case of being viewed from a direction indicated by an arrow III of Fig. 1;
Fig. 4 is an enlarged view showing one hole portion and a periphery of the one hole portion;
Fig. 5 is a view showing a state of a cross section of the belt member taken along line V-V of Fig. 4;
Fig. 6 is a diagram showing experimental results of uneven glossiness;
Parts (A) to (E) in Fig. 7 are diagrams showing results of an experiment on a relationship between an area of the hole portion and a protruding portion area;
Fig. 8 is a view showing another configuration example of the belt member;
Figs. 9A and 9B are enlarged views of the paper transport device;
Fig. 10 is a view showing a state of a cross section taken along line X-X in Fig. 9A;
Figs. 11A and 11B are views showing examples of another shape of a protruding portion; and
Fig. 12 is a view showing still another configuration example of the belt member.

### DETAILED DESCRIPTION OF THE INVENTION

Hereinafter, an exemplary embodiment of the present invention will be described with reference to the accompanying drawings.

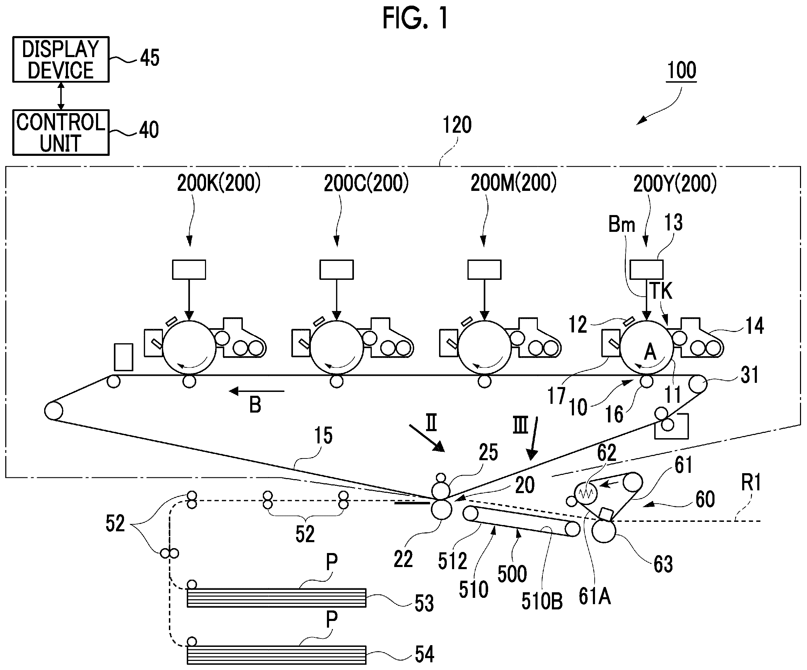

Fig. 1 is a view showing an image forming apparatus 100 according to the present exemplary embodiment.

The image forming apparatus 100 is provided with an image forming portion 120 that forms an image on paper P which is an example of a recording medium.

The image forming portion 120 is provided with a plurality of image forming units 200 that form an image to be transferred to the paper P, which is an example of the recording medium.

Each of the image forming units 200 has a photosensitive drum 11 as an example of an image holding body. Each of the image forming units 200 forms a toner image, which is an image to be transferred to the paper P, on the photosensitive drum 11.

Each of the image forming units 200 forms the toner image on the photosensitive drum 11 using a dry developer. Specifically, each of the image forming units 200 forms the toner image on the photosensitive drum 11 using a powdery dry carrier and a powdery dry toner.

In this example, the carrier has positive charge polarity. A toner has negative charge polarity.

Without being limited to using the dry developer, a wet developer may be used.

Each of the image forming units 200 forms a toner image on the photosensitive drum 11 using toners of different types from each other.

In the present exemplary embodiment, four image forming units 200, including a first image forming unit 200Y, a second image forming unit 200M, a third image forming unit 200C, and a fourth image forming unit 200K are provided.

In a movement direction of an intermediate transfer belt 15, the respective image forming units 200, including the first image forming unit 200Y, the second image forming unit 200M, the third image forming unit 200C, and the fourth image forming unit 200K, are provided in this order.

The first image forming unit 200Y forms a toner image using a yellow toner. The second image forming unit 200M forms a toner image using a magenta toner. The third image forming unit 200C forms a toner image using a cyan toner. The fourth image forming unit 200K forms a toner image using a black toner.

The image forming apparatus 100 is provided with the intermediate transfer belt 15 which is an example of an intermediate transfer body. Further, the image forming apparatus 100 is provided with a primary transfer unit 10. In the primary transfer unit 10, a toner image formed by each of the image forming units 200 is transferred to the intermediate transfer belt 15.

Further, the image forming apparatus 100 is provided with a secondary transfer unit 20. The toner image transferred onto the intermediate transfer belt 15 is transferred to the paper P in the secondary transfer unit 20.

In addition, the image forming apparatus 100 is provided with a fixing device 60. The fixing device 60 fixes a toner image transferred to the paper P to the paper P.

Further, the image forming apparatus 100 is provided with a control unit 40. The control unit 40 includes a CPU that executes a program and controls each unit in the image forming apparatus 100.

In addition, the image forming apparatus 100 is provided with a display device 45 that displays information to a user. The display device 45 is configured by a display panel or the like.

The display device 45 of the present exemplary embodiment is configured by a touch panel. The display device 45 receives an instruction from the user in addition to the display of the information to the user. The display device 45 can also be regarded as a receiving unit that receives an instruction from the user.

Each of the image forming units 200 is provided with a developing device 14. The developing device 14 attaches a toner to a surface of the photosensitive drum 11. The developing device 14 makes an electrostatic latent image on the photosensitive drum 11 visible with the toner.

In addition, each of the image forming units 200 is provided with a charging device 12 that charges the photosensitive drum 11. Further, each of the image forming units 200 is provided with an exposure device 13 that forms the electrostatic latent image on the photosensitive drum 11.

In each of the image forming units 200, the photosensitive drum 11, which is an example of the image holding body, rotates in an arrow A direction.

Examples of the exposure device 13 include a laser exposure device that emits a laser.

In addition thereto, examples of the exposure device 13 also include an exposure device including a plurality of light sources such as LEDs. In Fig. 1, light emitted from the exposure device 13 is indicated by reference symbol Bm.

Each of the image forming units 200 is provided with a primary transfer roll 16. A location where the primary transfer roll 16 is installed is the primary transfer unit 10.

In the primary transfer unit 10, a toner image formed on the photosensitive drum 11 is transferred to the intermediate transfer belt 15.

Further, each of the image forming units 200 is provided with a drum cleaner 17 that removes a developer remaining on the photosensitive drum 11.

The intermediate transfer belt 15 is circulated and moved in an arrow B direction at a speed determined in advance by a drive roll 31 driven by a motor (not shown).

The primary transfer unit 10 is configured to include the primary transfer roll 16 that is disposed to face the photosensitive drum 11 with the intermediate transfer belt 15 interposed therebetween.

A toner image on the photosensitive drum 11 is sequentially and electrostatically sucked to the intermediate transfer belt 15. Accordingly, the superimposed toner image is formed on the intermediate transfer belt 15.

The secondary transfer unit 20 is provided with a secondary transfer roll 22 and a backup roll 25.

The secondary transfer roll 22 is disposed on an outer surface side of the intermediate transfer belt 15. The backup roll 25 is disposed on an inner surface side of the intermediate transfer belt 15.

In the present exemplary embodiment, in the secondary transfer unit 20, a toner image transferred on the intermediate transfer belt 15 is transferred to the paper P transported to the secondary transfer unit 20.

A flow of processing performed in the image forming apparatus 100 will be described.

The image forming apparatus 100 receives, for example, image data output from an image reading apparatus (not shown), a PC, or the like. In the image forming apparatus 100, image processing is performed on the image data. Accordingly, image data corresponding to each of the plurality of image forming units 200 is generated.

Specifically, for example, image data of four colors including yellow, magenta, cyan, and black is generated. The generated image data is output to the exposure device 13 provided in the image forming unit 200.

The exposure device 13 irradiates the photosensitive drum 11 with, for example, light emitted from a semiconductor laser, according to input image data.

In the present exemplary embodiment, the surface of each photosensitive drum 11 is charged by the charging device 12. Next, scanning exposure is performed on the surface by the exposure device 13. Accordingly, an electrostatic latent image is formed on the surface of the photosensitive drum 11.

Next, development is performed by the developing device 14, and a toner image is formed on the photosensitive drum 11. In the primary transfer unit 10, the toner image is transferred onto the intermediate transfer belt 15.

After a toner image is transferred onto the intermediate transfer belt 15, the toner image is moved to the secondary transfer unit 20. The toner image is moved to the secondary transfer unit 20 by the intermediate transfer belt 15 that performs the circulatory movement.

In addition, in this case, the paper P from a first sheet accommodation unit 53 or a second sheet accommodation unit 54 is transported to the secondary transfer unit 20 by a transport roll 52 or the like.

Then, the toner image on the intermediate transfer belt 15 is electrostatically transferred onto the paper P in a collective manner in the secondary transfer unit 20.

After then, the paper P on which a toner image is transferred is moved from the secondary transfer unit 20 to a paper transport device 500. The paper transport device 500, which is an example of a recording medium transport device, transports the paper P to the fixing device 60.

The paper P transported to the fixing device 60 is heated by the fixing device 60. The fixing device 60 can be regarded as a heating device. In addition, in the fixing device 60, the paper P is pressurized.

In the present exemplary embodiment, a toner image on the paper P is fixed to the paper P by heating and pressurizing the paper P. After then, the paper P is discharged from the image forming apparatus 100.

The fixing device 60 is provided with a fixing belt 61 that performs circulatory movement and a heating source 62 that heats the fixing belt 61. Further, the fixing device 60 is provided with a pressurization roll 63 that is pressed against an outer peripheral surface of the fixing belt 61.

In the fixing device 60, the paper P passes between the fixing belt 61 and the pressurization roll 63. During this passage, the paper P is heated and pressurized.

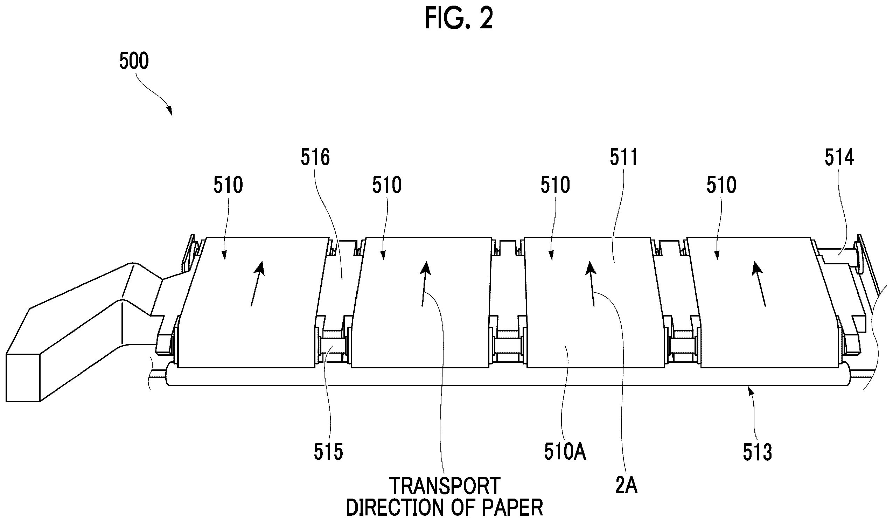

Fig. 2 is a view of the paper transport device 500 in a case of being viewed from a direction indicated by an arrow II of Fig. 1.

The paper transport device 500 is provided with a plurality of belt members 510.

Specifically, four belt members 510 are provided. The four belt members 510 are disposed in a state where positions thereof in a direction orthogonal to a transport direction of the paper P are shifted from each other.

In the present exemplary embodiment, each of the belt members 510 is formed in an annular shape. In other words, each of the belt members 510 is formed in an endless shape.

Each of the belt members 510 performs circulatory movement. Each of the belt members 510 is provided in a flat shape and has an upper surface 511. In the present exemplary embodiment, the upper surface 511 is moved in a direction indicated by an arrow 2A. The direction indicated by the arrow 2A is the transport direction of the paper P.

The fixing device 60 shown in Fig. 1 is provided on a downstream side of the belt members 510 in the transport direction in which the paper P is transported by the belt members 510.

Further, in the present exemplary embodiment, a removing member 513 that removes an attachment that is attached to the outer peripheral surfaces of the belt members 510 is provided. The removing member 513 is disposed in contact with outer peripheral surfaces 510A of the belt members 510. The removing member 513 is configured by a brush.

The removing member 513 removes the attachment attached to the outer peripheral surfaces 510A of the belt members 510. Examples of the attachment include paper powder.

A drive rotating member 514 is provided inside the belt members 510. The drive rotating member 514 rotates to apply a drive force for moving the belt members 510 to the belt members 510. The drive rotating member 514 rotates by receiving a drive force from a motor (not shown).

Further, a driven rotating member 515 is provided inside the belt members 510. The driven rotating member 515 is disposed on an upstream side of the drive rotating member 514 in the transport direction of the paper P. The driven rotating member 515 supports the belt members 510 from the inside of the belt members 510.

The driven rotating member 515 receives a force from inner peripheral surfaces 510B of the belt members 510 and is driven by the belt members 510 to rotate. The inner peripheral surfaces 510B are shown in Fig. 1.

The removing member 513 is pressed against the driven rotating member 515 via the belt members 510. The removing member 513 receives a force from the belt members 510 and rotates. The removing member 513 is driven by the belt members 510 and rotates.

Each of the belt members 510 is provided with a hole portion. In Fig. 2, the hole portion is not shown. In the present exemplary embodiment, air from an outer peripheral surface 510A side toward an inner peripheral surface 510B side of the belt members 510 passes through the hole portion.

A suction device 516 is provided inside the belt members 510. The suction device 516 sucks air on the outer peripheral surface 510A side of the belt members 510. Accordingly, the air on the outer peripheral surface 510A side of the belt members 510 passes through the hole portions provided in the belt members 510 and moves toward the inner peripheral surface 510B side of the belt members 510.

Accordingly, in the present exemplary embodiment, the paper P is sucked by the belt members 510, and the paper P is attached to the outer peripheral surfaces 510A of the belt members 510.

The belt members 510 transport the paper P attached to the outer peripheral surfaces 510A thereof toward the fixing device 60.

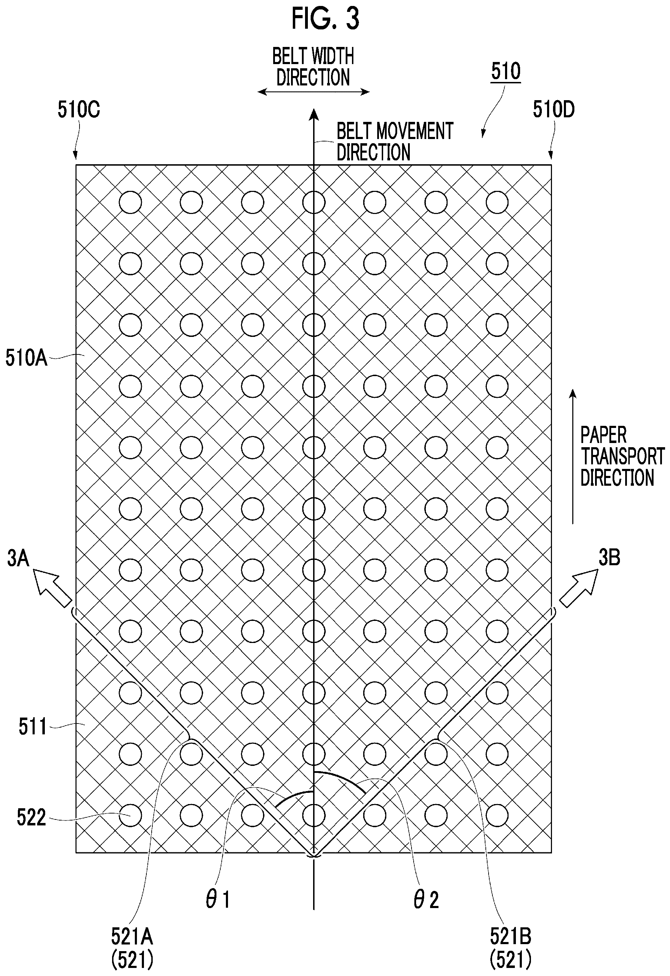

Fig. 3 is a view of the belt member 510 in a case of being viewed from a direction indicated by an arrow III of Fig. 1. In other words, Fig. 3 is a front view of the belt member 510.

In Fig. 3, one belt member 510 of the four belt members 510 is shown. The other three belt members 510 also have the same configuration as the configuration of the one belt member 510.

The belt member 510 is provided with a protruding portion 521 that protrudes from the outer peripheral surface 510A of the belt member 510.

A plurality of protruding portions 521 are provided. Each of the protruding portions 521 is provided in a linear shape. Specifically, each of the protruding portions 521 is provided in a linear shape.

The belt member 510 has the flat upper surface 511 and a flat lower surface 512. The lower surface 512 is shown in Fig. 1.

In the present exemplary embodiment, tension is applied to the belt member 510 by two rotating members, that is, the drive rotating member 514 and the driven rotating member 515 shown in Fig. 2. Accordingly, the belt member 510 of the present exemplary embodiment is provided with the flat upper surface 511 and the flat lower surface 512.

On the upper surface 511, as shown in Fig. 3, each of the protruding portions 521 is provided in a linear shape. In the present exemplary embodiment, the protruding portions 521 are also moved with the movement of the belt member 510.

In a case where the protruding portions 521 to be moved is positioned on the upper surface 511, each of the protruding portions 521 is provided in a linear shape.

Each of the protruding portions 521 is disposed in a state of being inclined with respect to a belt movement direction which is a movement direction of the belt member 510.

In the present exemplary embodiment, as the protruding portions 521, a first protruding portion 521A and a second protruding portion 521B having inclination angles different from each other with respect to the movement direction of the belt member 510 are provided.

In the present exemplary embodiment, an inclination angle θ1 of the first protruding portion 521A with respect to the movement direction of the belt member 510 is +45°. In addition, an inclination angle θ2 of the second protruding portion 521B with respect to the movement direction of the belt member 510 is -45°.

In the present exemplary embodiment, the first protruding portion 521A and the second protruding portion 521B are orthogonal to each other.

The inclination angle of the first protruding portion 521A is not limited to +45° and may be +30° or +60°. The inclination angle of the first protruding portion 521A may be other than +45°.

In addition, similarly, the inclination angle of the second protruding portion 521B is not limited to -45° and may be -30° or -60°. The inclination angle of the second protruding portion 521B may be other than -45°.

In addition, the inclination angle of the first protruding portion 521A and the inclination angle of the second protruding portion 521B may be different from each other.

A plurality of first protruding portions 521A are provided and are provided to extend toward a common direction. The plurality of first protruding portions 521A extend toward a direction indicated by an arrow 3A which is the common direction.

The plurality of first protruding portions 521A are provided in a state of being parallel to each other. In a state where the first protruding portions 521A are positioned on the upper surface 511, the plurality of first protruding portions 521A are provided in a state of being parallel to each other.

In addition, the first protruding portions 521A are inclined to approach one end portion 510C side in a width direction of the belt member 510 as the first protruding portions 521A go toward the downstream side in the transport direction of the paper P.

A plurality of second protruding portions 521B are also provided. The second protruding portions 521B are provided to extend toward a direction different from an extending direction of the first protruding portions 521A.

In addition, the plurality of second protruding portions 521B are provided to extend toward a common direction. The plurality of second protruding portions 521B are provided to extend toward a direction indicated by an arrow 3B which is the common direction.

The plurality of second protruding portions 521B are provided in a state of being parallel to each other. In a state where the second protruding portions 521B are positioned on the upper surface 511, the plurality of second protruding portions 521B are provided in a state of being parallel to each other.

The second protruding portions 521B are inclined to approach the other end portion 510D side in the width direction of the belt member 510 as the second protruding portions 521B go toward the downstream side in the transport direction of the paper P.

In the present exemplary embodiment, the plurality of first protruding portions 521A and the plurality of second protruding portions 521B having different extending directions from each other are provided. Accordingly, in the present exemplary embodiment, the outer peripheral surface 510A of the belt member 510 is configured to be provided with the protruding portions 521 in a lattice shape. In other words, in the present exemplary embodiment, the plurality of protruding portions 521 are disposed in a lattice shape.

Further, in the present exemplary embodiment, the belt member 510 is provided with a hole portion 522. Air from the outer peripheral surface 510A side toward the inner peripheral surface 510B side of the belt member 510 passes through the hole portion 522.

In the present exemplary embodiment, a plurality of hole portions 522 are disposed in a state of being arranged along the belt movement direction. Further, the plurality of hole portions 522 are disposed in a state of being arranged along the width direction of the belt member 510.

The hole portions 522 are round holes. Shapes of the hole portions 522 are not particularly limited. In addition thereto, the shapes of the hole portions 522 may be an elliptical shape or a polygonal shape.

The first protruding portions 521A and the second protruding portions 521B may be provided in a state of not being inclined with respect to the belt movement direction.

For example, one type of protruding portion 521, among the first protruding portion 521A and the second protruding portion 521B, may be provided in a state of being along the belt movement direction. In addition, the other type of protruding portion 521 may be provided in a state of being along a direction orthogonal to the belt movement direction.

Also in this case, the plurality of protruding portions 521 are provided in a lattice shape.

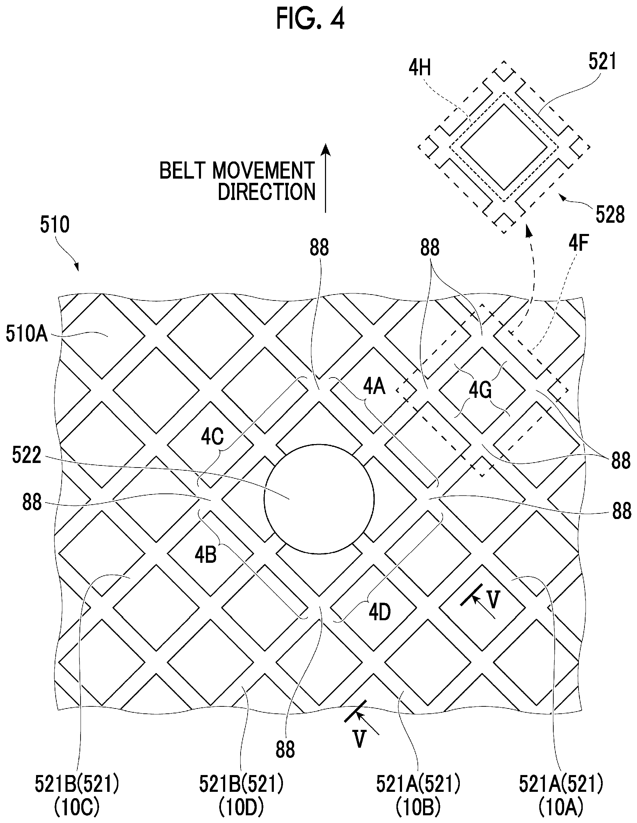

Fig. 4 is an enlarged view showing one hole portion 522 and a periphery of the one hole portion 522.

In the present exemplary embodiment, the protruding portions 521 are provided to surround the hole portion 522.

In the present exemplary embodiment, the hole portion 522 is surrounded by the protruding portions 521 positioned around the hole portion 522 among the plurality of protruding portions 521 arranged in a lattice shape.

Specifically, in the present exemplary embodiment, the hole portion 522 is surrounded by the protruding portions 521 which are a portion indicated by reference symbol 4A, a portion indicated by reference symbol 4B, a portion indicated by reference symbol 4C, and a portion indicated by reference symbol 4D.

The portion indicated by reference symbol 4A is a portion of one first protruding portion 521A indicated by reference symbol 10A, which is included in the plurality of first protruding portions 521A.

The portion indicated by reference symbol 4B is a portion of the other first protruding portion 521A, the other first protruding portion 521A being disposed on an opposite side of the one first protruding portion 521A with the hole portion 522 interposed therebetween and being indicated by reference symbol 10B.

The portion indicated by reference symbol 4C is a portion of one second protruding portion 521B indicated by reference symbol 10C, which is included in the plurality of second protruding portions 521B.

The portion indicated by reference symbol 4D is a portion of the other second protruding portion 521B, the other second protruding portion 521B being disposed on an opposite side of the one second protruding portion 521B with the hole portion 522 interposed therebetween and being indicated by reference symbol 10D.

Each of the first protruding portion 521A and the second protruding portion 521B has an intersection location 88 that intersects with the other protruding portion 521.

The portion indicated by reference symbol 4A is a portion positioned between two intersection locations 88 of one first protruding portion 521A indicated by reference symbol 10A.

The portion indicated by reference symbol 4B is a portion positioned between two intersection locations 88 of the other first protruding portion 521A indicated by reference symbol 10B.

The portion indicated by reference symbol 4C is a portion positioned between two intersection locations 88 of one second protruding portion 521B indicated by reference symbol 10C.

The portion indicated by reference symbol 4D is a portion positioned between two intersection locations 88 of the other second protruding portion 521B indicated by reference symbol 10D.

In the present exemplary embodiment, the hole portion 522 is surrounded by the protruding portions 521, and accordingly, an attachment force of the paper P to the belt member 510 is ensured.

Herein, for example, a case where a plurality of cylindrical protrusions, which are in a state of being separated from each other, are provided as the protruding portions 521 on the outer peripheral surface 510A of the belt member 510 will be assumed. In this case, air can move between the protrusions.

In this case, air that has entered a gap between the paper P and the belt member 510 from the outside of the gap moves between the protrusions and moves toward the hole portion 522. In this case, a suction force of the paper P is reduced, and the attachment force of the paper P to the belt member 510 is reduced.

On the other hand, in the present exemplary embodiment, the hole portion 522 is surrounded by the protruding portions 521. In this case, air outside the gap between the paper P and the belt member 510 is less likely to reach the hole portion 522.

In this case, an attachment force of the paper P to the belt member 510 is increased compared to a configuration where the hole portion 522 is not surrounded by the protruding portions 521.

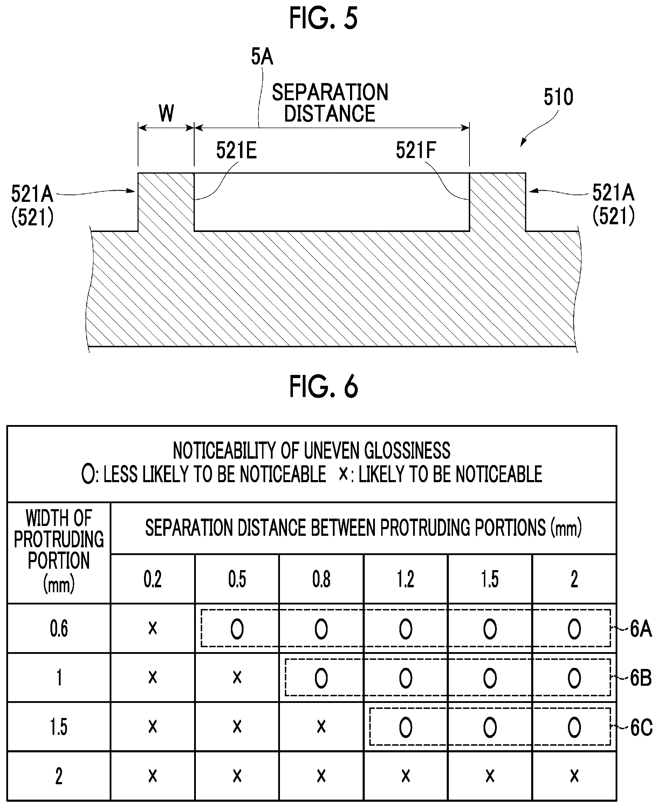

Fig. 5 is a view showing a state of a cross section of the belt member 510 taken along line V-V of Fig. 4. Fig. 5 shows a state of a cross section of the belt member 510 in a plane orthogonal to the extending direction of the first protruding portion 521A.

In the present exemplary embodiment, the shape of the cross section of the first protruding portion 521A and the shape of the cross section of the second protruding portion 521B are the same. In addition, in the present exemplary embodiment, a separation distance between the first protruding portions 521A adjacent to each other and a separation distance between the second protruding portions 521B adjacent to each other are equal to each other.

In the present exemplary embodiment, a width W of the protruding portion 521 is within 1.5 mm.

In the present exemplary embodiment, the protruding portion 521 is provided in a linear shape as described above. The width W of the protruding portion 521 is within 1.5 mm in a direction orthogonal to the extending direction of the protruding portion 521 that extends in a linear shape.

Accordingly, a problem caused by heating of the paper P with the belt member 510 is less likely to occur. Specifically, uneven glossiness caused by heating of the paper P by the belt member 510 is less likely to occur.

In the present exemplary embodiment, as shown in Fig. 1, the belt member 510 of the paper transport device 500 is positioned at a position facing a portion 61A of the fixing belt 61 provided in the fixing device 60. In this case, the belt member 510 is heated by receiving heat from the fixing device 60.

In a case where the belt member 510 is heated, the paper P is heated by the belt member 510 in a case where the paper P is transported by the belt member 510.

In this case, in a case where the hole portion 522 is provided in the belt member 510, heating unevenness of the paper P occurs. Accordingly, uneven glossiness caused by a difference in heating occurs on an image on the paper P.

In the present exemplary embodiment, on the paper P, a hole portion-facing portion that faces the hole portion 522 and that is not in contact with the belt member 510 and a belt contact portion that comes into contact with the belt member 510 are generated.

In this case, a degree of heating is different between the hole portion-facing portion and the belt contact portion. In this case, uneven glossiness is likely to occur on an image on the paper P.

On the other hand, in a case where the belt member 510 is provided with the linear protruding portion 521 as in the present exemplary embodiment, the area of the belt contact portion is reduced, and uneven glossiness is less likely to be noticeable.

Further, in a case where the width W of the protruding portion 521 is within 1.5 mm, the area of the belt contact portion is further reduced, and uneven glossiness is even less likely to be noticeable.

Fig. 6 is a diagram showing experimental results of uneven glossiness.

In an experiment on uneven glossiness, a plurality of types of belt members 510 having different widths W of the protruding portions 521 and different separation distances between the protruding portions 521 are prepared. Then, noticeability of uneven glossiness is examined for each belt member 510.

As a result, in the present exemplary embodiment, in a case where the width W of the protruding portion 521 is within 1.5 mm, uneven glossiness is not noticeable in some of the belt members 510.

In a case where the width W of the protruding portion 521 is 2.0 mm, uneven glossiness is likely to be noticeable in all types of belt members 510.

Herein, a separation distance between the protruding portions 521 refers to a distance indicated by reference symbol 5A in Fig. 5.

The separation distance between the protruding portions 521 refers to a distance between the protruding portions 521 that are in a parallel relationship with each other and are in an adjacent relationship with each other. In other words, the separation distance between the protruding portions 521 refers to a distance between the protruding portions 521 that extend in a common direction and are in an adjacent relationship with each other.

More specifically, the separation distance between the protruding portions 521 refers to a distance between an end portion 521E of one protruding portion 521 in the width direction and an end portion 521F of the other protruding portion 521 positioned adjacent to the one protruding portion 521 in the width direction.

The "end portion 521E of the one protruding portion 521 in the width direction" refers to an end portion positioned on a side close to the other protruding portion 521. In addition, the "end portion 521F of the other protruding portion 521 in the width direction" refers to an end portion positioned on a side close to the one protruding portion 521.

In the present exemplary embodiment, as shown in Fig. 6, in a case where the width W of the protruding portion 521 is within 1.5 mm and the separation distance is 1.2 mm or more, uneven glossiness is less likely to be noticeable under any conditions.

In a case where the separation distance is small, the protruding portions 521 are densely disposed, and the area of the belt contact portion is substantially increased. In this case, uneven glossiness is likely to be noticeable.

On the other hand, in a case where the separation distance is large, the protruding portions 521 are disposed in a sparse state. In this case, the area of the belt contact portion is reduced, and uneven glossiness is less noticeable.

In addition thereto, for example, it is preferable that the separation distance between the protruding portions 521 adjacent to each other is equal to or larger than a value obtained by multiplying the width W of the protruding portion 521 by 0.8.

For example, in a case where the width W of the protruding portion 521 is 0.6 mm, the value obtained by multiplying the width W of the protruding portion 521 by 0.8 is 0.48 mm.

In the present exemplary embodiment, as indicated by reference symbol 6A in Fig. 6, in the belt member 510 in which the width W of the protruding portion 521 is 0.6 mm and the separation distance is 0.48 mm or more, uneven glossiness is not noticeable.

In addition, for example, in a case where the width W of the protruding portion 521 is 1.0 mm, a value obtained by multiplying the width W of the protruding portion 521 by 0.8 is 0.8 mm.

In the present exemplary embodiment, as indicated by reference symbol 6B, in the belt member 510 in which the width W of the protruding portion 521 is 1.0 mm and the separation distance is 0.8 mm or more, uneven glossiness is not noticeable.

In addition, for example, in a case where the width W of the protruding portion 521 is 1.5 mm, the value obtained by multiplying the width W of the protruding portion 521 by 0.8 is 1.2 mm.

In the present exemplary embodiment, as indicated by reference symbol 6C, in the belt member 510 in which the width W of the protruding portion 521 is 1.5 mm and the separation distance is 1.2 mm or more, uneven glossiness is not noticeable.

In view of the above results, in the present exemplary embodiment, for example, it is preferable to satisfy at least one of the following three conditions including a first condition to a third condition.

For example, it is more preferable that the two conditions are satisfied. For example, it is even more preferable that all the three conditions are satisfied.

First condition: The width W of the protruding portion 521 is within 1.5 mm.

Second condition: The separation distance between the protruding portions 521 adjacent to each other is 1.2 mm or more.

Third condition: The separation distance between the protruding portions 521 adjacent to each other is equal to or larger than a value obtained by multiplying the width W of the protruding portion 521 by 0.8.

Next, a relationship between the area of the hole portion 522 and the protruding portion 521 will be described.

In the present exemplary embodiment, as described above, the plurality of protruding portions 521 are provided. Further, the plurality of protruding portions 521 are disposed in a lattice shape. Further, the hole portion 522 is surrounded by the protruding portions 521 positioned around the hole portion 522 among the plurality of protruding portions 521 disposed in a lattice shape.

In the present exemplary embodiment, by disposing the protruding portions 521 in a lattice shape, a plurality of rectangular protruding portions 528 are provided on the outer peripheral surface 510A as indicated by reference symbol 4F in Fig. 4.

The plurality of rectangular protruding portions 528 are adjacent to each other. In addition, each of the plurality of rectangular protruding portions 528 is provided in contact with another rectangular protruding portion 528 positioned adjacent thereto.

In other words, one rectangular protruding portion 528 shares a portion positioned between the intersection locations 88 with the other rectangular protruding portion 528 positioned adjacent thereto.

In Fig. 4, each of portions indicated by reference symbol 4G is a portion positioned between the intersection locations 88. In Fig. 4, each of the portions indicated by reference symbol 4G is shared between one rectangular protruding portion 528 indicated by reference symbol 4F and four other rectangular protruding portions 528 positioned around the one rectangular protruding portion 528.

In the present exemplary embodiment, as a result of the experiment, it is found that, for example, the area of a region surrounded by one rectangular protruding portion 528 may be 5% or more and 80% or less of the area of the hole portion 522.

The area of the region surrounded by the rectangular protruding portion 528 refers to an area inside the rectangle indicated by reference symbol 4H in Fig. 4.

Specifically, the area of the region surrounded by the rectangular protruding portion 528 refers to the area of a region surrounded by a line along the extending direction of the protruding portion 521, the line passing through a central portion of the protruding portion 521 in the width direction.

For example, the area may be 5% or more and 80% or less of the area of the hole portion 522.

Hereinafter, in the present specification, the area of the region surrounded by the rectangular protruding portion 528 will be referred to as a "protruding portion area".

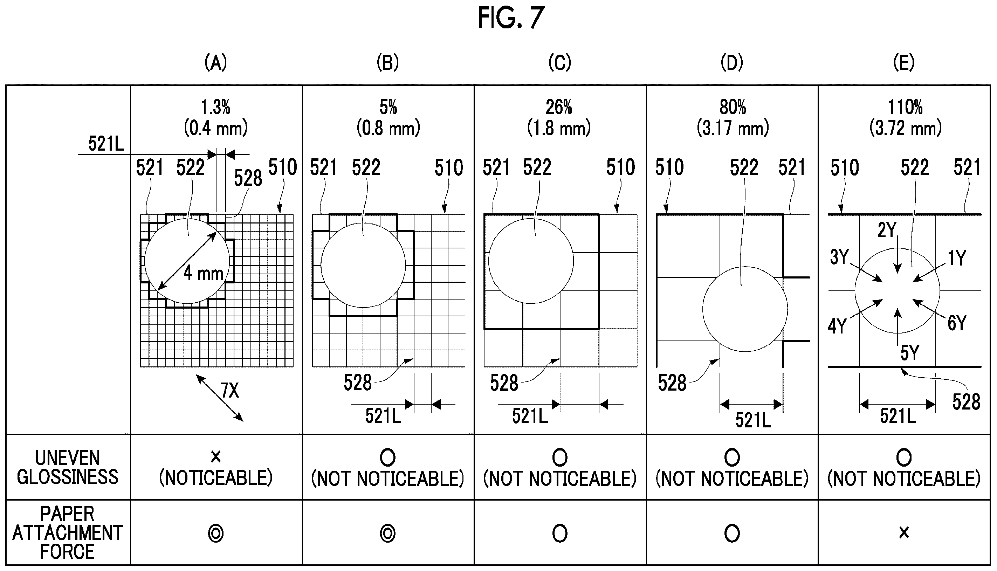

Parts (A) to (E) in Fig. 7 are diagrams showing results of an experiment on a relationship between the area of the hole portion 522 and the protruding portion area.

In each of parts (A) to (E) in Fig. 7, the belt member 510 is shown in a state of being inclined by 45°. In each of parts (A) to (E) in Fig. 7, a direction indicated by an arrow 7X of part (A) in Fig. 7 indicates the movement direction of the belt member 510.

Part (A) in Fig. 7 shows experimental results under a condition in which the protruding portion area is 1.3% of the area of the hole portion 522.

In part (A) in Fig. 7, the diameter of the hole portion 522 is 4 mm. In addition, in part (A) in Fig. 7, a length 521L of one side of the rectangular protruding portion 528 is 0.4 mm.

Under this condition, the plurality of rectangular protruding portions 528 are in a state of being densely disposed. In other words, under this condition, the protruding portions 521 are densely disposed.

In this case, the area of the belt contact portion described above is large. In this case, uneven glossiness is likely to be noticeable.

Under the condition shown in part (A) in Fig. 7, an attachment force of the paper P to the belt member 510 is ensured.

In the present exemplary embodiment, as will be described later, as the protruding portions 521 are provided, the attachment force of the paper P to the belt member 510 is reduced in some cases. On the other hand, under the condition shown in part (A) in Fig. 7, the attachment force is less likely to be reduced.

Next, part (E) in Fig. 7 will be described.

Part (E) in Fig. 7 shows experimental results under a condition in which the protruding portion area is 110% of the area of the hole portion 522. In part (E) in Fig. 7, the diameter of the hole portion 522 is 4 mm, and the length 521L of one side of the rectangular protruding portion 528 is 3.72 mm.

In this case, the plurality of rectangular protruding portions 528 are disposed in a sparse state. In other words, the protruding portions 521 are disposed in a sparse state.

In this case, the area of a location where the protruding portions 521 are in contact with the paper P is small. In other words, in this case, the area of the belt contact portion is small. In this case, occurrence of uneven glossiness is less noticeable.

On the other hand, in this case, an attachment force of the paper P to the belt member 510 is small.

In part (E) in Fig. 7, as indicated by arrows 1Y to 6Y, air inside each of the plurality of rectangular protruding portions 528 is directed toward the hole portion 522.

Among the rectangular protruding portion 528, in the protruding portion 528 in which the hole portion 522 is included, air in the protruding portion 528 is sucked out.

In this case, a suction force acting on the paper P, that is, a suction force acting per unit area is reduced. In this case, an attachment force of the paper P to the belt member 510 is reduced.

In the configuration example shown in part (E) in Fig. 7, the size of each of the rectangular protruding portions 528 is large. In this case, a suction force acting on the paper P, that is, a suction force acting per unit area is reduced.

As a result, in the configuration example shown in part (E) in Fig. 7, an attachment force of the paper P to the belt member 510 is reduced.

As shown in part (E) in Fig. 7, it is found that in a case where the protruding portion area is 110% of the area of the hole portion 522, the attachment force of the paper P to the belt member 510 is reduced.

On the other hand, under the condition shown in part (A) in Fig. 7, the area of one rectangular protruding portion 528 is small, and the volume of a space inside the one rectangular protruding portion 528 is small.

In this case, the amount of air sucked out from each of insides of the rectangular protruding portions 528 is reduced. The amount of air sucked out from each of the insides of the rectangular protruding portions 528 in a state where the hole portion 522 is included is reduced.

As a result, under the condition shown in part (A) in Fig. 7, a reduction in a suction force acting on the paper P, which is a suction force acting per unit area, is suppressed. In this case, the reduction in an attachment force of the paper P to the belt member 510 is suppressed.

Part (B) in Fig. 7 shows experimental results under a condition in which the protruding portion area is 5% of the area of the hole portion 522. Part (C) in Fig. 7 shows experimental results under a condition in which the protruding portion area is 26% of the area of the hole portion 522. Part (D) in Fig. 7 shows experimental results under a condition in which the protruding portion area is 80% of the area of the hole portion 522.

In all of parts (B) to (D) in Fig. 7, the diameter of the hole portion 522 is 4 mm.

In addition, in part (B) in Fig. 7, the length 521L of one side of the rectangular protruding portion 528 is 0.8 mm. In part (C) in Fig. 7, the length 521L of one side of the rectangular protruding portion 528 is 1.8 mm. In addition, in part (D) in Fig. 7, the length 521L of one side of the rectangular protruding portion 528 is 3.17 mm.

In each of these three conditions, the plurality of rectangular protruding portions 528 are disposed in a sparse state. In other words, the protruding portions 521 are disposed in a sparse state.

In each of these three conditions, the area of the belt contact portion is reduced. In this case, uneven glossiness is less likely to be noticeable.

In addition, in each of these three conditions, the volume of the space inside one rectangular protruding portion 528 is small. In each of these three conditions, a reduction in an attachment force of the paper P to the belt member 510 is suppressed.

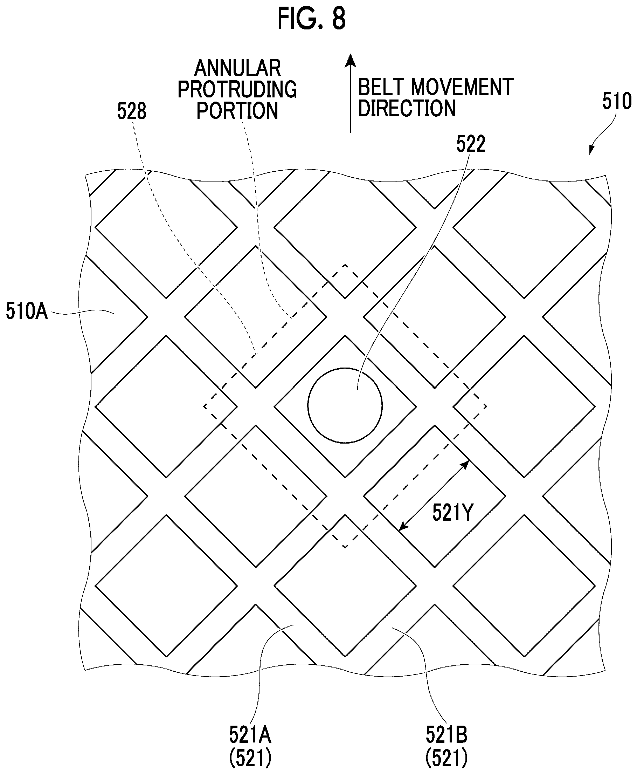

Fig. 8 is a view showing another configuration example of the belt member 510.

In this configuration example, as described above, the plurality of rectangular protruding portions 528 are provided on the outer peripheral surface 510A of the belt member 510.

The rectangular protruding portions 528 are annular, and in this configuration example, it can also be said that the plurality of annular protruding portions 521 are provided.

Further, in this configuration example, the hole portion 522 is provided as described above.

In the configuration example shown in Fig. 8, the area of the hole portion 522 is smaller than the area of a region surrounded by one annular protruding portion 521.

Even in this configuration example shown in Fig. 8, the protruding portions 521 are disposed in a lattice shape as described above.

In this configuration example, the diameter of the hole portion 522 is smaller than a separation distance 521Y between the protruding portions 521 adjacent to each other.

The protruding portions 521 adjacent to each other extend toward a common direction. In this configuration example, the diameter of the hole portion 522 is smaller than the separation distance 521Y between the protruding portions 521 that extend toward the common direction and that are adjacent to each other.

Even in this configuration example, a reduction in an attachment force of the paper P to the belt member 510 is suppressed.

In this configuration example, air inside one annular protruding portion 521 moves toward one hole portion 522. In this case, as described above, a reduction in an attachment force of the paper P to the belt member 510 is suppressed, compared to a case where air inside the plurality of protruding portions 521 is directed to one hole portion 522.

A case where the hole portion 522 and the protruding portion 521 are provided without controlling a positional relationship between the hole portion 522 and the protruding portion 521 in a stage of manufacturing the belt member 510 will be assumed.

In this case, a state where one hole portion 522 is included in a region on an inside of each of the plurality of annular protruding portions 521 can also occur. In this case, air inside each of the plurality of annular protruding portions 521 moves toward the one hole portion 522.

However, even in this case, some hole portions 522 of the other multiple hole portions 522 are disposed inside the annular protruding portions 521. In this case, a suction force of the paper P is increased at a location where some of the other hole portions 522 are provided.

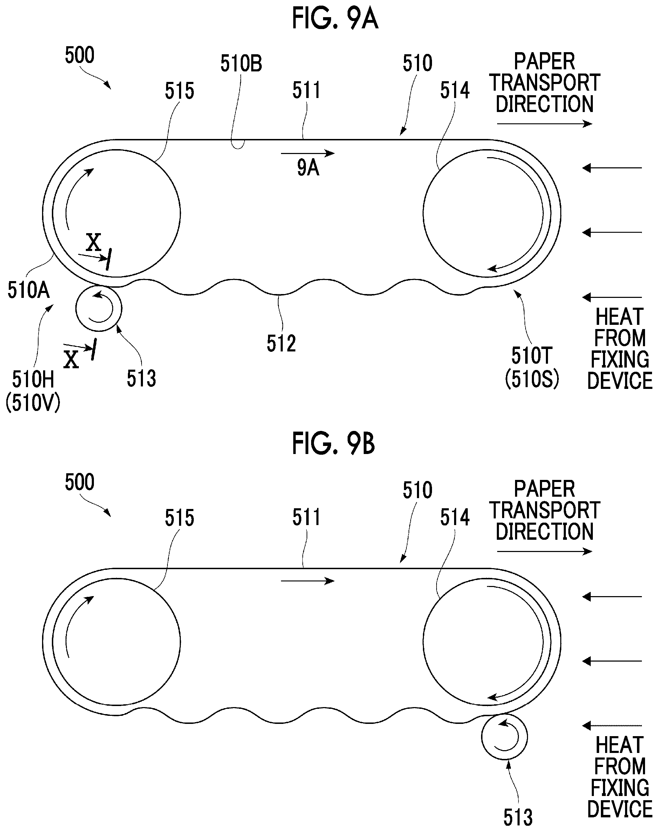

Figs. 9A and 9B are enlarged views of the paper transport device 500.

Figs. 9A and 9B show a state in a case where the paper transport device 500 is viewed from a lateral side of the paper transport device 500. In addition, in Figs. 9A and 9B, the paper transport device 500 is shown in a simplified manner. In addition, in Figs. 9A and 9B, the protruding portion 521 described above is not shown.

Fig. 9A is a view showing the paper transport device 500 described above. Fig. 9B is a view showing another configuration example of the paper transport device 500.

As described above and as shown in Fig. 9A, the belt member 510 is disposed in a flat shape and has the upper surface 511 and the lower surface 512. In the present exemplary embodiment, the belt member 510 circulates and moves such that the upper surface 511 moves in a direction indicated by an arrow 9A.

Further, in the present exemplary embodiment, as described above, the removing member 513 that removes an attachment attached to the outer peripheral surface 510A of the belt member 510 is provided.

The removing member 513 is disposed in contact with the outer peripheral surface 510A of the belt member 510. The removing member 513 is configured by a brush.

The driven rotating member 515 is provided inside the belt member 510. The driven rotating member 515 is disposed on an upstream side of the drive rotating member 514 in the transport direction of the paper P.

The driven rotating member 515 receives a force from the inner peripheral surface 510B of the belt member 510 and is driven by the belt member 510 to rotate.

The removing member 513 is pressed against the driven rotating member 515 via the belt members 510. The removing member 513 comes into contact with the outer peripheral surface 510A of the belt member 510. The removing member 513 receives a force from the belt members 510 and rotates.

In the present exemplary embodiment, the fixing device 60 shown in Fig. 1 is provided on the downstream side of the belt member 510 in the transport direction of the paper P for the belt member 510.

The removing member 513 comes into contact with a portion 510H of the belt member 510, which is positioned on an opposite side to a fixing device 60 side.

The belt member 510 has a portion 510T positioned on the fixing device 60 side and the portion 510H positioned on the opposite side to the fixing device 60 side.

The removing member 513 comes into contact with the portion 510H positioned on the opposite side.

The belt member 510 has one end portion 510S and the other end portion 510V having positions different from each other in the transport direction of the paper P. The one end portion 510S is positioned on the fixing device 60 side, and the other end portion 510V is positioned on the opposite side to the fixing device 60.

The removing member 513 is disposed on the other end portion 510V side of the belt member 510.

In addition, the removing member 513 is pressed against the driven rotating member 515 via the belt member 510.

Herein, a case where the removing member 513 is provided on the fixing device 60 side will be assumed as shown in Fig. 9B.

In this case, heat from the fixing device 60 is likely to act on the removing member 513. In a case where the heat from the fixing device 60 acts on the removing member 513, a removed matter attached to the removing member 513 is likely to be fixed to the removing member 513.

The removed matter removed from the belt member 510 is attached to the removing member 513. In a case where the removing member 513 is provided on the fixing device 60 side, the removed matter is likely to be fixed to the removing member 513.

On the other hand, as shown in Fig. 9A, in a case where the removing member 513 is provided on the opposite side to the fixing device 60 side, the fixing is less likely to occur.

In the present exemplary embodiment, as shown in Fig. 9A, the drive rotating member 514 having a function of sending the belt member 510 is provided on the fixing device 60 side.

For this reason, on the fixing device 60 side, the belt member 510 is less likely to be loosened compared to a side where the driven rotating member 515 is provided.

In a case where the removing member 513 is provided on the fixing device 60 side, the removing member 513 is brought into contact with the belt member 510 in a state of being slightly loosened. In this case, unevenness in cleaning is reduced.

However, in this case, as described above, a removed matter attached to the removing member 513 is likely to be fixed to the removing member 513. Therefore, in the present exemplary embodiment, the removing member 513 is provided on the opposite side to the fixing device 60 side as described above.

In the present exemplary embodiment, the removing member 513 is provided on the opposite side to the fixing device 60 side, but unevenness in cleaning is less likely to occur.

In the present exemplary embodiment, as described above, the protruding portions 521 are provided on the outer peripheral surface 510A of the belt member 510. In the present exemplary embodiment, unevenness in cleaning is less likely to occur due to the protruding portions 521.

In the configuration where the protruding portions 521 are not provided, it is necessary to clean the belt member 510 over the entire surface of the belt member 510. In this case, unevenness in cleaning is likely to occur.

On the other hand, in the present exemplary embodiment, the protruding portions 521 are cleaning targets, and the area of a location where cleaning is required is small. In this case, unevenness in cleaning is less likely to occur compared to a case where cleaning is required over the entire surface of the belt member 510.

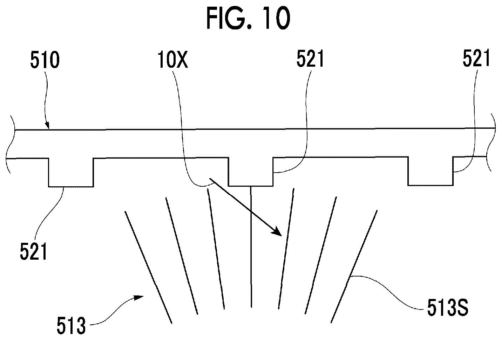

Fig. 10 is a view showing a state of a cross section taken along line X-X in Fig. 9A. In Fig. 10, the driven rotating member 515 is not shown.

In a case where the belt member 510 is provided with the protruding portions 521, fibers 513S constituting the removing member 513 consisting of a brush come into contact with top portions of the protruding portions 521.

Further, the fibers 513S constituting the brush also moves in a direction indicated by an arrow 10X in some cases. The fibers 513S move from a base side of the protruding portions 521 to a top portion side of the protruding portions 521.

In this case, an attachment attached to the belt member 510 is likely to be separated from the belt member 510, and the attachment is likely to be removed from the belt member 510.

In a case where the protruding portions 521 are provided at the belt member 510, a contact area between the belt member 510 and the paper P, which is a cause of contamination, is reduced, and the number of cleaning locations is reduced.

In a case where the protruding portions 521 are provided, the amount of contamination attached to the belt member 510 is reduced. In this case, compared to a case where the amount of contamination attached to the belt member 510 is large, cleaning unevenness is less likely to occur.

In addition, in a case where the protruding portions 521 are provided, a load acting on the removing member 513 is reduced compared to a case where the protruding portions 521 are not provided. In this case, the life of the removing member 513 is extended.

A case where the protruding portions 521 are not provided and the entire surface of the belt member 510 needs to be cleaned will be assumed. In this case, the area of the location of the removing member 513 on which a pressure from the belt member 510 acts is increased. In this case, the removing member 513 is likely to deteriorate.

On the other hand, in a case where the protruding portions 521 are provided, a load acting on the removing member 513 is reduced compared to a case where the protruding portions 521 are not provided. In this case, the life of the removing member 513 is extended.

Further, in a case where the protruding portions 521 are provided as in the present exemplary embodiment, the removing member 513 can be provided to be separated from the belt member 510 compared to a case where the protruding portions 521 are not provided.

In a case where the protruding portions 521 are provided, the removing member 513 may be brought into contact with the protruding portions 521, and thus the removing member 513 can be provided to be separated from the belt member 510. In this case, a contact pressure between the removing member 513 and the belt member 510 is reduced, and the life of the removing member 513 is extended.

Further, as in the present exemplary embodiment, in a case where the protruding portions 521 are disposed in a state of being inclined with respect to the belt movement direction, a time of contact between the protruding portions 521 and the removing member 513 is increased.

A case where the protruding portions 521 are disposed along the belt movement direction or a direction orthogonal to the belt movement direction will be assumed. In this case, the time of contact between the protruding portions 521 and the removing member 513 in a case where the protruding portions 521 pass through the removing member 513 is shortened.

On the other hand, in the present exemplary embodiment, the protruding portions 521 are disposed in a state of being inclined. In this case, the time of contact between the protruding portions 521 and the removing member 513 in a case where the protruding portions 521 pass through the removing member 513 is increased. In this case, reliability of removal of an attachment by the removing member 513 is further increased.

The removing member 513 is not excluded from being provided on the fixing device 60 side.

For example, a preferable aspect is that the removing member 513 is provided on the opposite side, but the removing member 513 may be provided on the fixing device 60 side.

For example, in the image forming apparatus 100 in which the temperature of the fixing device 60 is low, the removing member 513 may be provided on the fixing device 60 side. In addition, for example, in a case where a member that shields heat from the fixing device 60 toward the paper transport device 500 is provided, the removing member 513 may be provided on the fixing device 60 side.

### [Others]

In the above description, a case where the paper transport device 500 is provided on the upstream side of the fixing device 60 in the transport direction of the paper P has been described as an example.

The paper transport device 500 may be provided on the downstream side of the fixing device 60 without being limited thereto. In this case, the paper P after passing through the fixing device 60 is transported to the downstream side by the paper transport device 500.

Alternatively, the paper transport device 500 may be provided on both the upstream side and the downstream side of the fixing device 60.

In a configuration where the paper transport device 500 is provided on the downstream side of the fixing device 60, the fixing device 60 is provided on the upstream side of the belt member 510 in the transport direction of the paper P for the belt member 510.

In a case where the paper transport device 500 is provided on the downstream side of the fixing device 60, as described above, there is a possibility in which the paper transport device 500 is affected by heat of the fixing device 60.

Even in this case, in a case where the protruding portions 521 are provided at the belt member 510 as described above, occurrence of the problem above caused by the heat can be suppressed.

In addition, in a case where the paper transport device 500 is provided on the downstream side of the fixing device 60, as described above, for example, it is preferable that the removing member 513 is provided on the opposite side to the fixing device 60 side.

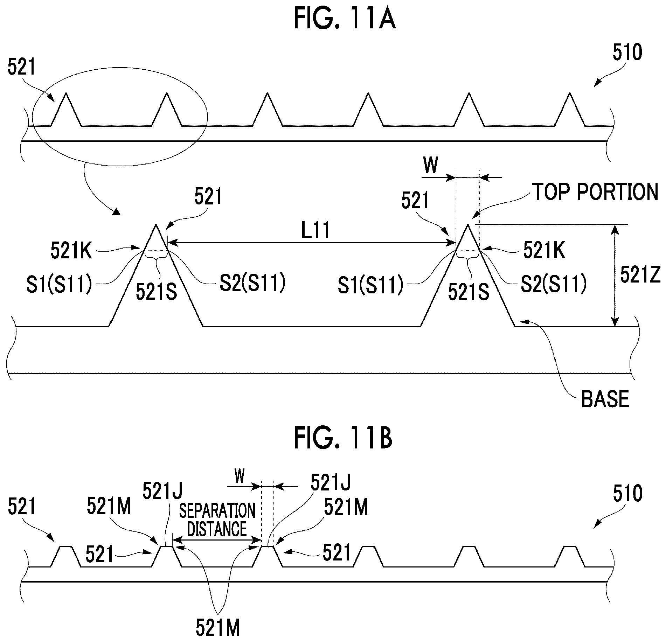

Figs. 11A and 11B are views showing examples of other shapes of the protruding portions 521. Figs. 11A and 11B show states of cross sections of the protruding portions 521 in a plane orthogonal to the extending direction of the protruding portions 521.

The shapes of the cross sections of the protruding portions 521 may be a triangle as shown in Fig. 11A or a trapezoid as shown in Fig. 11B.

The shapes of the cross sections of the protruding portions 521 in the above description are shown in Fig. 5. In Fig. 5, the shapes of the cross sections of the protruding portions 521 are rectangular.

Without being limited thereto, as shown in Figs. 11A and 11B, the shapes of the cross sections of the protruding portions 521 may be a triangle or a trapezoid.

As described above, for example, it is preferable that the widths W of the protruding portions 521 are within 1.5 mm. In addition, for example, it is preferable that a separation distance between the protruding portions 521 adjacent to each other is 1.2 mm or more.

In addition, as described above, for example, it is preferable that the separation distance between the protruding portions 521 is equal to or larger than a value obtained by multiplying the width W of the protruding portion 521 by 0.8.

A case where the shapes of the cross sections of the protruding portions 521 are triangles as shown in Fig. 11A will be described.

Hereinafter, in the present specification, a distance between the top portion and a base of the triangular protruding portion 521 will be referred to as a total length 521Z. In addition, a location of the protruding portion 521 that is positioned on the base side by 1/4 of the total length 521Z from the top portion will be referred to as an intermediate location 521K.

In addition, an imaginary line segment 521S passing through the intermediate location 521K, which is the line segment 521S extending in the width direction of the protruding portion 521, is assumed. The line segment 521S has two end portions S11 including one end portion S1 and the other end portion S2.

In a case where the shape of the cross section of the protruding portion 521 is a triangle, for example, it is preferable that the width W of the protruding portion 521 at the intermediate location 521K is within 1.5 mm. In other words, for example, it is preferable that the length of the line segment 521S passing through the intermediate location 521K is within 1.5 mm.

In a case where the shape of the cross section of the protruding portion 521 is a triangle, a portion of the protruding portion 521, which is positioned on the top portion side of the intermediate location 521K, is likely to touch the paper P.

In a case where the width W of the protruding portion 521 at the intermediate location 521K is within 1.5 mm, uneven glossiness is less likely to occur as described above.

Even in a case where the shape of the cross section of the protruding portion 521 is a triangle, for example, it is preferable that the separation distance between the protruding portions 521 is 1.2 mm or more as described above.

In addition, even in a case where the shape of the cross section of the protruding portion 521 is a triangle, as described above, for example, it is preferable that the separation distance between the protruding portions 521 is equal to or larger than a value obtained by multiplying the width W of the protruding portion 521 by 0.8.

Herein, in a case where the shape of the cross section of the protruding portion 521 is a triangle the separation distance between the protruding portions 521 refers to a distance L11. The distance L11 is a distance between the above line segments 521S that are present corresponding to the protruding portions 521.

Specifically, the separation distance in this case refers to a distance between the end portion S11 of one line segment 521S that is present corresponding to one protruding portion 521 and the end portion S11 of the other line segment 521S that is present corresponding to the other protruding portion 521 positioned adjacent to the one protruding portion 521.

In a case where the shape of the cross section of the protruding portion 521 is a triangle, for example, it is preferable that the separation distance between the line segments 521S is 1.2 mm or more.

In addition, in a case where the shape of the cross section of the protruding portion 521 is a triangle, for example, it is preferable that the separation distance between the line segments 521S is equal to or larger than a value obtained by multiplying the width W of the protruding portion 521 by 0.8. Herein, the width W of the protruding portion 521 refers to a width at the intermediate location 521K. In other words, the width W of the protruding portion 521 herein refers to the length of the line segment 521S.

In addition, in a case where the shape of the cross section of the protruding portion 521 is a trapezoid as shown in Fig. 9B, for example, it is preferable that the width W at a location where an upper surface 521J is positioned is within 1.5 mm.

In addition, also in a case where the shape of the cross section of the protruding portion 521 is a trapezoid, for example, it is preferable that the separation distance between the protruding portions 521 is 1.2 mm or more.

In addition, for example, it is preferable that the separation distance is equal to or larger than a value obtained by multiplying the width W of the protruding portion 521 by 0.8. The width W herein refers to the width of the protruding portion 521 at the location where the upper surface 521J is positioned.

In a case where the shape of the cross section of the protruding portion 521 is a trapezoid, the separation distance between the protruding portions 521 refers to a distance between the respective upper surfaces 521J of the protruding portions 521 that are in a relationship of being adjacent to each other.

Specifically, the separation distance between the protruding portions 521 refers to a distance between respective end portions 521M of the upper surfaces 521J.

Each of the upper surfaces 521J has two end portions 521M of the protruding portions 521 at positions different from each other in the width direction. The separation distance between the protruding portions 521 refers to a distance between the respective end portions 521M of the upper surfaces 521J.

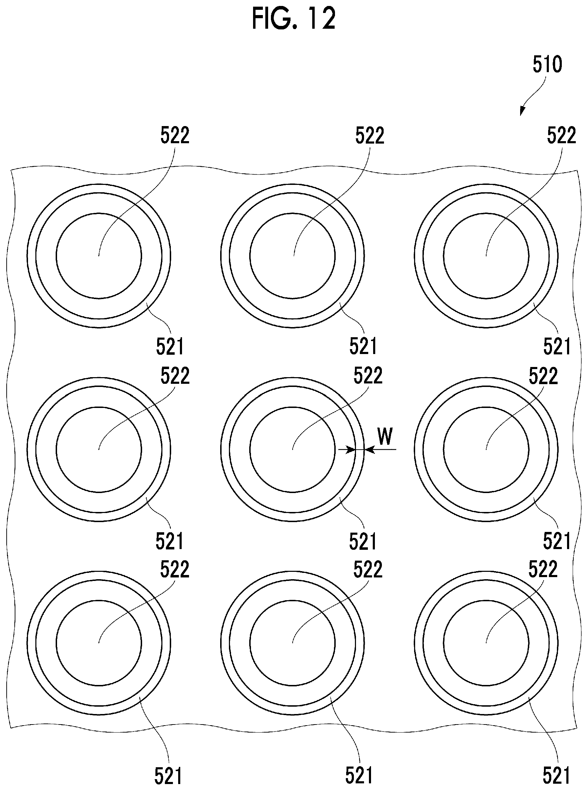

Fig. 12 is a view showing still another configuration example of the belt member 510. Fig. 12 shows a state in a case where a part of the belt member 510 is viewed from the front.

In this configuration example, the plurality of annular protruding portions 521 independent of each other are provided. Each of the protruding portions 521 has a circular shape.

Further, in this configuration example, the hole portion 522 is provided inside the protruding portion 521.

In this configuration example, the area of the hole portion 522 is smaller than the area of the region surrounded by one protruding portion 521. The protruding portion 521 is not limited to a circular shape and may have an elliptical shape or a rectangular shape.

The protruding portions 521 are not limited to being provided in a lattice shape as described above, and as shown in Fig. 12, each of the plurality of annular protruding portions 521 may be provided in an independent state. In this configuration example, the hole portion 522 is provided inside each of the protruding portions 521.

The "independent state" refers to a state where one protruding portion 521 and another protruding portion 521 positioned adjacent to the one protruding portion 521 do not come into contact with each other.

It is not required to provide the hole portion 522 in a form of corresponding to each of all the protruding portions 521. A configuration where the hole portion 522 is provided corresponding to a part of the protruding portion 521 and the hole portion 522 is not present inside the other part of the protruding portion 521 may be adopted.

Even in this configuration example shown in Fig. 12, the hole portion 522 is surrounded by the protruding portion 521, and an attachment force of the paper P to the belt member 510 is increased.

Also in the configuration example shown in Fig. 12, as described above, for example, it is preferable that the width W of the protruding portion 521 is within 1.5 mm.

### (Supplementary Notes)

(((1))) A recording medium transport device comprising:
   a belt member that performs circulatory movement, that includes a hole portion for causing air to pass from an outer peripheral surface side toward an inner peripheral surface side of the belt member, and that transports a recording medium attached to an outer peripheral surface; and
   a protruding portion that is provided in a state of protruding from the outer peripheral surface of the belt member and that is provided to surround the hole portion.
(((2))) The recording medium transport device according to (((1))),
   wherein a plurality of protruding portions are provided and are disposed in a lattice shape, and
   the hole portion is surrounded by the protruding portions positioned around the hole portion, among the plurality of protruding portions disposed in the lattice shape.
(((3))) The recording medium transport device according to (((2))),
   wherein each of the protruding portions disposed in the lattice shape is disposed in a state of being inclined with respect to a movement direction of the belt member.
(((4))) The recording medium transport device according to (((1))),
   wherein on the outer peripheral surface of the belt member, a plurality of annular protruding portions are provided as the protruding portions, and
   an area of the hole portion is smaller than an area of a region surrounded by one of the annular protruding portions.
(((5))) The recording medium transport device according to any one of (((1))) to (((4))),
   wherein the protruding portion is provided in a linear shape, and
   a width of the protruding portion is within 1.5 mm.
(((6))) The recording medium transport device according to (((5))),
   wherein a plurality of protruding portions are provided and are disposed in a lattice shape, and
   a separation distance between the protruding portions that extend in a common direction and that are adjacent to each other is 1.2 mm or more.
(((7))) The recording medium transport device according to any one of (((1))) to (((6))),
   wherein a plurality of protruding portions are provided and are disposed in a lattice shape, and
   a separation distance between the protruding portions that extend in a common direction and that are adjacent to each other is equal to or larger than a value obtained by multiplying a width of the protruding portion by 0.8.
(((8))) The recording medium transport device according to any one of (((1))) to (((7))),
   wherein a plurality of protruding portions are provided and are disposed in a lattice shape,
   the hole portion is surrounded by the protruding portions positioned around the hole portion, among the plurality of protruding portions disposed in the lattice shape,
   as the protruding portions are disposed in the lattice shape, a plurality of rectangular protruding portions are provided on the outer peripheral surface, and
   an area of a region surrounded by the rectangular protruding portions is 5% or more and 80% or less of an area of the hole portion.
(((9))) An image forming apparatus comprising:
   an image forming portion that forms an image on a recording medium;
   a heating device that heats the recording medium on which the image is formed by the image forming portion; and
   a recording medium transport device that transports the recording medium on which the image is formed by the image forming portion to the heating device or that transports the recording medium which has passed through the heating device,
   wherein the recording medium transport device has a configuration of the recording medium transport device according to any one of (((1))) to (((8))).

With the recording medium transport device according to (((1))), a reduction in an attachment force of the recording medium to the outer peripheral surface of the belt member, which is caused by provision of the protruding portion on the outer peripheral surface of the belt member, can be suppressed compared to a case where the protruding portion protruding from the outer peripheral surface of the belt member is not provided in a form of surrounding the hole portion provided in the belt member.

With the recording medium transport device according to (((2))), compared to a case where the hole portion is surrounded by a single annular protruding portion, the plurality of protruding portions can be positioned on a flow path of air that is to be directed toward the hole portion along a surface of the recording medium facing the belt member, among surfaces of the recording medium, and a reduction in a suction force, which is caused by air outside a space between the belt member and the recording medium being directed toward the hole portion, can be suppressed.

With the recording medium transport device according to (((3))), in a case where a member that comes into contact with the outer peripheral surface of the belt member is provided, a time of contact between the member and the protruding portion can be increased compared to a case where the protruding portion is along the movement direction of the belt member or the width direction of the belt member.

With the recording medium transport device according to (((4))), a suction force acting on the recording medium, which is a suction force acting per unit area, can be increased compared to a case where the area of the hole portion is larger than the area of the region surrounded by one annular protruding portion.

With the recording medium transport device according to (((5))), uneven glossiness that can occur in the image formed on the recording medium can be reduced compared to a case where the width of the protruding portion exceeds 1.5 mm.

With the recording medium transport device according to (((6))), uneven glossiness that can occur in the image formed on the recording medium can be reduced, compared to a case where the separation distance between the protruding portions adjacent to each other is less than 1.2 mm.

With the recording medium transport device according to (((7))), uneven glossiness that can occur in the image formed on the recording medium can be reduced compared to a case where the separation distance between the protruding portions is less than the value obtained by multiplying the width of the protruding portion by 0.8.

With the recording medium transport device according to (((8))), uneven glossiness that can occur in the image formed on the recording medium can be reduced compared to a case where the area of the region surrounded by the protruding portion is less than 5% of the area of the hole portion, and an attachment force of the recording medium to the belt member can be increased, compared to a case where the area of the region surrounded by the protruding portion exceeds 80% of the area of the hole portion.

With the image forming apparatus according to (((9))), a reduction in an attachment force of the recording medium to the outer peripheral surface of the belt member, which is caused by provision of the protruding portion on the outer peripheral surface of the belt member, can be suppressed compared to a case where the protruding portion protruding from the outer peripheral surface of the belt member is not provided in a form of surrounding the hole portion provided in the belt member.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

60: fixing device
100: image forming apparatus
120: image forming portion
500: paper transport device
510: belt member
510A: outer peripheral surface
510B: inner peripheral surface
513: removing member
514: drive rotating member
515: driven rotating member
521: protruding portion
521A: first protruding portion
521B: second protruding portion
522: hole portion
P: paper

## Claims

1. A recording medium transport device comprising:
a belt member that performs circulatory movement, that includes a hole portion for causing air to pass from an outer peripheral surface side toward an inner peripheral surface side of the belt member, and that transports a recording medium attached to an outer peripheral surface; and
a protruding portion that is provided in a state of protruding from the outer peripheral surface of the belt member and that is provided to surround the hole portion.

2. The recording medium transport device according to claim 1,
wherein a plurality of protruding portions are provided and are disposed in a lattice shape, and
the hole portion is surrounded by the protruding portions positioned around the hole portion, among the plurality of protruding portions disposed in the lattice shape.

3. The recording medium transport device according to claim 2,
wherein each of the protruding portions disposed in the lattice shape is disposed in a state of being inclined with respect to a movement direction of the belt member.

4. The recording medium transport device according to claim 1,
wherein on the outer peripheral surface of the belt member, a plurality of annular protruding portions are provided as the protruding portions, and
an area of the hole portion is smaller than an area of a region surrounded by one of the annular protruding portions.

5. The recording medium transport device according to any one of claims 1 to 4,
wherein the protruding portion is provided in a linear shape, and
a width of the protruding portion is within 1.5 mm.

6. The recording medium transport device according to claim 5,
wherein a plurality of protruding portions are provided and are disposed in a lattice shape, and
a separation distance between the protruding portions that extend in a common direction and that are adjacent to each other is 1.2 mm or more.

7. The recording medium transport device according to any one of claims 1 to 6, wherein a plurality of protruding portions are provided and are disposed in a lattice shape, and
a separation distance between the protruding portions that extend in a common direction and that are adjacent to each other is equal to or larger than a value obtained by multiplying a width of the protruding portion by 0.8.

8. The recording medium transport device according to any one of claims 1 to 7, wherein a plurality of protruding portions are provided and are disposed in a lattice shape,
the hole portion is surrounded by the protruding portions positioned around the hole portion, among the plurality of protruding portions disposed in the lattice shape,
as the protruding portions are disposed in the lattice shape, a plurality of rectangular protruding portions are provided on the outer peripheral surface, and
an area of a region surrounded by the rectangular protruding portions is 5% or more and 80% or less of an area of the hole portion.

9. An image forming apparatus comprising:
an image forming portion that forms an image on a recording medium;
a heating device that heats the recording medium on which the image is formed by the image forming portion; and
a recording medium transport device that transports the recording medium on which the image is formed by the image forming portion to the heating device or that transports the recording medium which has passed through the heating device,
wherein the recording medium transport device has a configuration of the recording medium transport device according to any one of claims 1 to 8.
